# EUROPEAN PATENT SPECIFICATION

(11) **EP 3 673 721 B1**
(45) Date of publication and mention of the grant of the patent: **10.08.2022**
(21) Application number: 19217813.5
(22) Date of filing: 19.12.2019
(51) Int. Cl.: A01D 34/00, G05D 1/02, A47L 5/00, A01D 75/18

(54) **LAWN MOWER ROBOT**
MÄHROBOTER
TONDEUSE ROBOTIQUE

(30) Priority: 19.12.2018 IT 201800020182
(43) Date of publication of application: 01.07.2020
(73) Proprietor: Bernini, Fabrizio, 52021 Bucine - Arezzo (IT)
(72) Inventor: Bernini, Fabrizio, 52021 Bucine - Arezzo (IT)
(74) Representative: Fabbriciani, Simone

(56) References cited:
- EP-A1- 2 689 650
- EP-A1- 3 298 874
- CN-A- 109 063 575
- US-A1- 2002 140 815
- US-A1- 2013 190 965
- US-A1- 2017 344 020

## Description

This invention relates to the technical sector of automatic gardening devices.

In particular, the invention relates to an autonomous lawn mower robot with particular attention to the aspects linked to the control and management of the grass cutting activities.

The lawn mower devices are used to keep lawns, gardens and grassy areas in general in optimum conditions, that is to say, for keeping the grass below a certain height in a substantially homogeneous manner over the entire cutting area.

To allow the movement of the robot inside the working area, guaranteeing at the same time that it does not escape, it is known to install a perimeter wire which delimits the space inside of which the robot can move.

When the robot moves towards the perimeter wire, suitable sensors detect the presence indicating that the boundary of the area inside which the cutting operation can/must be performed has been reached. Consequently, the robot modifies its feed direction thereby preventing escape from its operating area.

Moreover, it is always necessary to delimit with the perimeter wire all those obstacles present inside the work area which the robot must avoid, such as, for example, trees, shrubs, flower beds, swimming pools or furnishing elements for gardens.

It is therefore evident that this requirement is particularly onerous since it necessarily requires the installation of one or more perimeter wires positioned to delimit in a precise and accurate manner the space inside of which the robot can actually move and operate. The documents US2017/344020A1 and EP2689650A1 disclose lawn mowers that operate without perimeter wires.

In this context, the technical purpose which forms the basis of this invention is to provide a lawn mower robot which overcomes at least some of the above-mentioned drawbacks of the prior art.

In particular, the aim of the invention is to provide a lawn mower robot which can be easily and quickly installed which is able to move inside the work area in a safe manner, avoiding the risk of accidentally escaping or striking any obstacles present inside it.

The technical purpose indicated and the aims specified are substantially achieved by a lawn mower robot comprising the technical features described in one or more of the appended claims.

The invention describes a lawn mower robot which comprises at least one optical sensor, a legible storage support and a control unit.

The optical sensor configured to continuously acquire a sequence of operating images of a surface in front of the lawn mower robot along the feed direction.

The legible storage support is configured for storing a plurality of reference images showing turf to be cut.

The control unit configured for comparing each operating image with the plurality of reference images generating a respective comparison percentage value representing the probability that the operating image shows a turf to be cut.

The control unit is also configured for modifying at least one operating parameter of the lawn mower robot if the comparison percentage value is less than a predetermined percentage value.

Advantageously, the control unit is able to analyse the operating images acquired by the optical sensor determining whether these images represent a turf to be cut or do not represent a turf to be cut, but, for example, rocky ground. Consequently, the control unit can assess whether the robot should continue the cutting operation along the feed direction, or whether it is better to modify at least one operating parameter of the robot, in such a way as to avoid, for example, damage to the blades or to fall into in a swimming pool, with the risk of damaging the electronics of the robot. Further features and advantages of this invention are more apparent in the detailed description below, with reference to a preferred, non-restricting, embodiment of a lawn mower robot as illustrated in the accompanying drawings, in which:
- Figure 1 schematically shows a lawn mower robot in which are denoted the features according to this invention;
- Figures 2A and 2B show a possible operating condition of the lawn mower robot, wherein the surface in front of the robot has a turf to be cut;
- Figures 3A and 3B show a further possible operating condition of the lawn mower robot, wherein the surface in front of the robot does not have a turf to be cut;

In the accompanying drawings, the numeral 1 denotes the lawn mower robot according to the invention, which will be indicated below as robot 1.

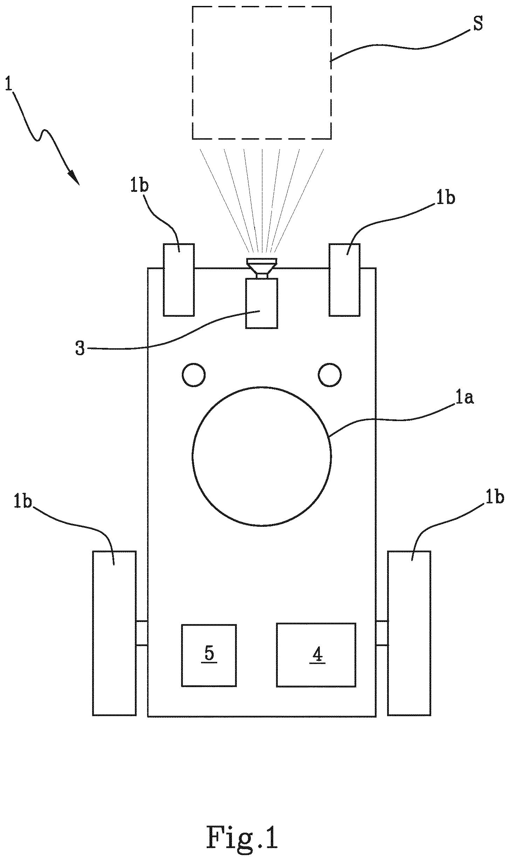

The robot 1, shown schematically in terms of its main components in Figure 1, is in particular a robot of the self-propelled type, that is to say, movable in a substantially autonomous manner along a feed direction "X" inside a work area "A", in particular for performing an operation for cutting a turf present inside it.

The robot 1 comprises grass cutting means 1a, for example one or more blades, for cutting turf.

The robot 1 also comprises motor means 1b designed to allow the movement along the feed direction "X".

By way of example, the power supply of the robot 1, both with regard to the motor means and the cutting means 1a, may be performed by electric motors, powered by a battery; the latter may be of the rechargeable type. Preferably, the recharging of the robot 2, which occurs at a fixed station 1a or recharging base, is achieved by electrical coupling, in particular of the inductive type.

Preferably, the battery may also power other electrical/electronic devices provided on the lawn mower robot 1.

The robot 1 comprises at least one optical sensor 3 configured to continuously acquire a sequence of operating images of a surface "S" in front of the robot 1 along the feed direction.

In other words, the optical sensor 3 is aimed on a portion of the work area "A" located immediately in front of the robot 1, in such a way as to continuously monitor the direction towards which the latter is moving.

By way of a non-limiting example, the optical sensor may be a camera (photo camera or video camera) or any other device which is able to acquire images.

The robot 1 also comprises a legible storage support 4 configured for storing a plurality of reference images showing turf to be cut.

In other words, the legible storage support 4 stores a set of reference images in which turfs are shown on which an operation for cutting the grass can be performed, or should be performed.

By way of a non-limiting example, the reference images can therefore show lawns, fields or other surfaces which have features (such as height or density of the turf) such as to require maintenance activities which can be performed by the robot 1.

Advantageously, the legible storage support 4 can be edited at least for generating, updating or storing the plurality of reference images.

The robot 1 also comprises a control unit 5 configured for comparing each of the operating images which are acquired by means of the optical sensor 3 with the plurality of reference images.

The control unit 5 therefore generates for each operating image a comparison percentage value (uniquely associated with the respective operating image) which represents the probability that the operating image shows a turf to be cut.

In other words, the control unit 5 performs an analysis of the operating images which the optical sensor 3 acquires during the movement of the robot 1, attributing to each a percentage value indicating the probability that the image has been acquired of a portion of the operating area "A" on which the robot 1 must operate or not.

The control unit 5 is further configured for modifying at least one operating parameter of the robot 1 if the comparison percentage value is less than a predetermined percentage value.

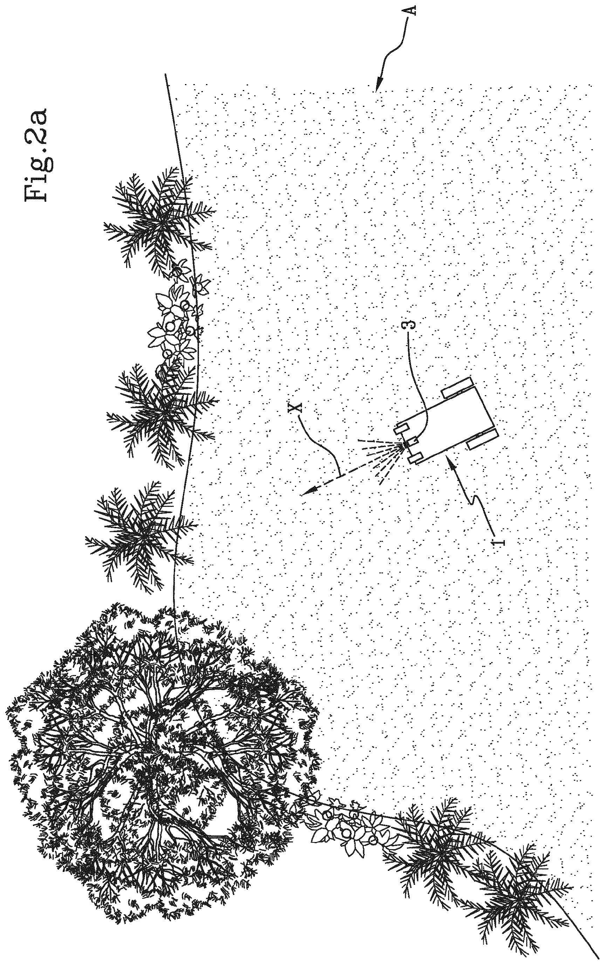

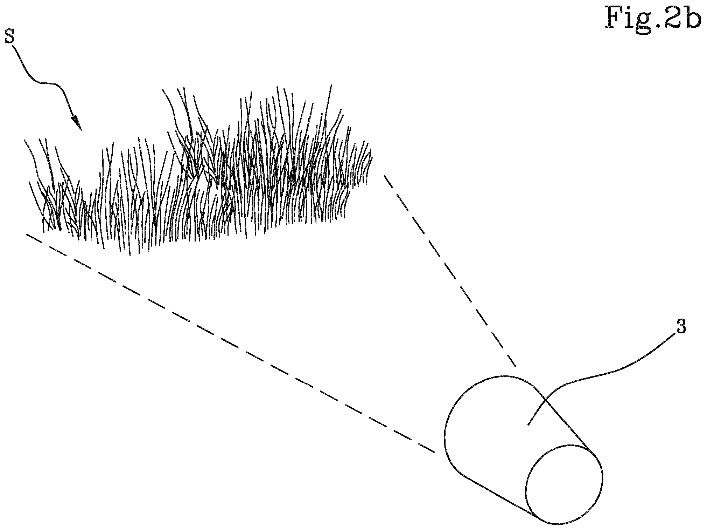

In other words, as shown schematically in Figures 2A and 2B, when the optical sensor 3 acquires an operating image which can be interpreted with a suitable margin of confidence as turf to be cut, the robot 1 will proceed with the cutting procedure without modifying the operating parameters.

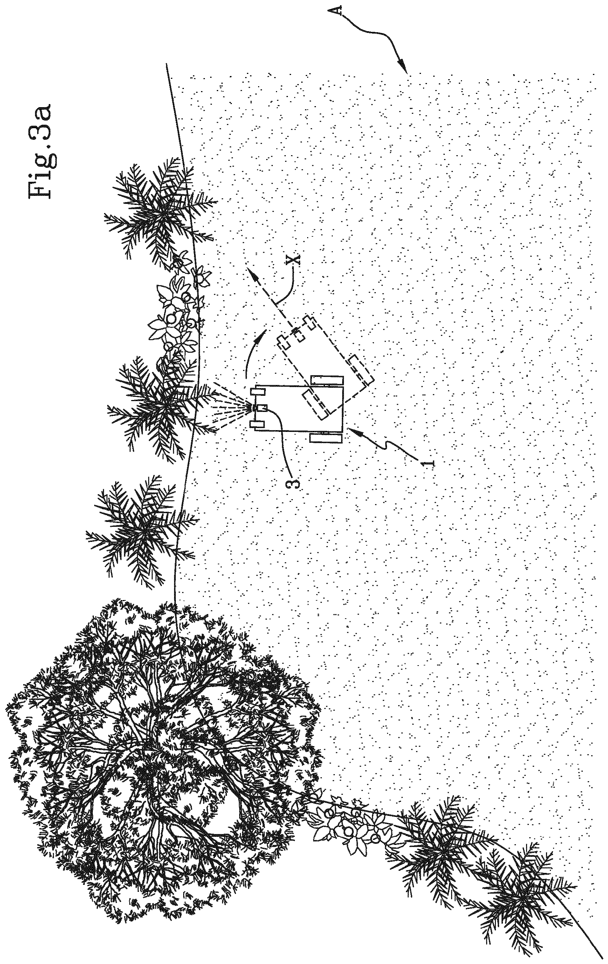

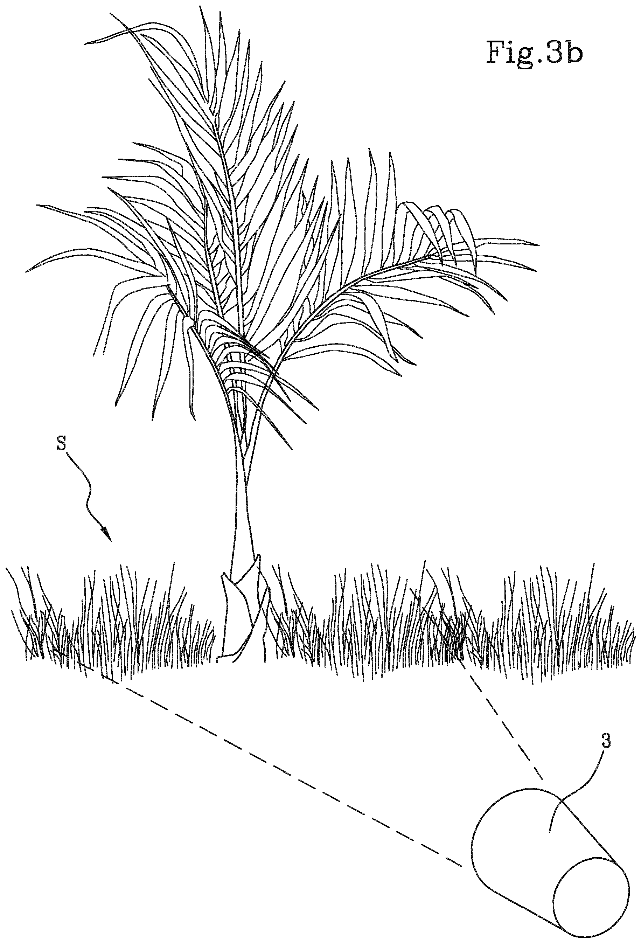

On the other hand, as shown schematically in Figures 3A and 3B, if the probability that a portion of the work area "A" towards which the robot 1 is moving has a turf which must be cut is less than a predetermined percentage, the control unit 5 intervenes for modifying at least one operating parameter of the robot 1, the feed direction "X" in the particular case illustrated in the accompanying drawings, in particular to prevent the robot 1 from starting a cutting procedure in that portion.

For example, the control unit 5 can activate/deactivate the cutting means 1: this feature is particularly useful if the robot 1 is to pass over portions of the working area "A" in which there is gravel, stones, branches or other objects which could damage the cutting means 1a, or, as shown in Figure 3B, modify the feed direction "X", this feature is particularly useful to ensure the robot 1 avoids obstacles such as swimming pools, trees or bushes.

By way of a non-limiting example, the following description refers to a predetermined percentage value equal to 91%.

According to the invention, the predetermined percentage value defines a confidence range inside of which it is possible to guarantee, irrespective of imprecisions in the decision-making process which could result from an incorrect interpretation and consequent comparison of certain marginal details which can be derived from the images, a correct identification of the operating images, therefore keeping unaltered the operating parameters of the robot 1 only when it is reasonably certain that the surface "S" towards which the robot 1 is moving actually has grass on which it is necessary to perform a cutting operation.

Preferably, the reference images comprise images which show the operating area inside of which the robot 1 moves.

In this way, the reference images are representative of the actual working environment in which the robot 1 operates, thereby allowing the process for comparing and assessing the operating images to be optimised, which will be more easily comparable with the reference images since they refer to and show the same environment.

Advantageously, the control unit 5 is designed to be connected to a remote processing unit and is configured to send to the latter the operating images if the respective percentage comparison value is less than the predetermined percentage value and greater than a percentage control value.

By way of a non-limiting example, the following description refers to a percentage control value equal to 10%.

Advantageously, the percentage control value defines a reasonable confidence range inside of which it is possible to guarantee, irrespective of imprecisions in the decision-making process which could result from an incorrect interpretation and comparison of certain marginal details which can be derived from the images, a correct identification of the operating images as showing portions of the working area "A" on which the robot 1 must not operate.

It is therefore possible to modify at least one operating parameter of the robot 1 since it is reasonably certain that the surface "S" towards which the robot 1 is moving does not have a turf on which it is necessary to perform a cutting operation or has obstacles which the robot 1 must avoid.

On the other hand, every time, after comparing an operating image with the set of reference images, the probability that the operating image represents a surface on which the robot 1 must operate is within the range indicated above (for example, between 10% and 90% in accordance with the above-mentioned reference values), the control unit 5 transmits it to a remote processing unit.

In particular, the predetermined percentage value and the percentage control value delimit the margins of probability outside of which it is possible to determine whether on the surface from which a certain operating image has been obtained it is possible/necessary to pass the robot 1: if the percentage comparison value is greater than 90%, then it is possible to determine that the operating image which has generated it represents a turf to be cut, on the contrary, percentage comparison values of less than 10% do not represent turf to be cut and it is therefore opportune to modify at least one operating parameter of the robot 1 in such a way that no cutting operation is performed in this surface.

If, on the other hand, the comparison of the operating image with the plurality of reference images generates a percentage comparison value in the range indicated above, then it would not be possible to determine in a sufficiently sure manner whether the operating image shows a turf to be cut or not.

In this situation, the control unit 5 transmits the operating image to the remote processing unit at which, as described in more detail below, the actual contents of the operating image will be determined. Advantageously, in the case of percentage comparison values within the above-mentioned range (and therefore less than the predetermined percentage value), inside of which it is not possible to adopt with reasonable certainty the nature of the surface "S" in front of the robot 1, the control unit modifies at least one operating parameter of the robot 1 interpreting beforehand the surface as if it were not a turf to be cut until the uncertainty is resolved.

Advantageously, the predetermined percentage value and the percentage control value can be suitably selected according to the requirements and to the particular features of the specific operating area "A" inside of which the robot 1 operates.

In accordance with possible embodiments of this invention, the control unit 5 may be connected to a remote processing unit which comprises processors such as smartphones, tablets, computers or a storage and processing system accessible by means of an Internet connection such as, for example, a computing cloud.

Advantageously, the robot 1 described herein makes it possible to overcome the drawbacks of the prior art, in particular substantially simplifying the installation process and the putting into use since it is not necessary to provide a perimeter wire or install further components which allow the operational area "A" to be delimited inside of which the robot 1 can move and operate safely.

This result is obtained by introducing an optical sensor 3 which acquires operating images showing the surfaces "S" towards which the robot 1 moves and a control unit 5 which analyses them so as to determine whether the robot 1 can move and operate on these surfaces "S".

The invention also relates to a system for controlling at least one lawn mower robot 1.

In particular, the system according to the invention comprises at least one robot 1, in particular a robot 1 made in accordance with the above-mentioned specifications and technical features, and a remote processing unit connected to the robot 1 in such a way as to receive from it operating images acquired by the optical sensor 3.

In particular, the transmission of the operating images from the robot 1 to the remote processing unit occurs every time the comparison percentage value generated as a function of the comparison between a given operating image and the reference images is less than the predetermined percentage value and greater than the percentage control value.

The remote processing unit is configured for determining for each operating image received whether the operating image shows a turf to be cut or not, preferably as a function of an input which can be entered by an operator.

The remote processing unit may also in turn store a plurality of reference images.

In other words, every time the control unit 5 is not able to determine in a reasonably certain manner whether a predetermined operating image represents a turf to be cut or not, it sends it to the remote processing unit at which the uncertainty will be resolved.

In particular, the process for determining the nature of the surface shown in the operating image may be performed by comparing the operating image with a database of reference images stored by the remote processing unit, which could be more complete, larger and accurate than that present on the legible storage support 4.

Alternatively, if this comparison also does not allow determination of whether the operating image represents a turf to be cut or not, it is possible to assign to an operator the correct classification of the operating image.

In other words, the remote processing unit is configured for providing the operating image to an operator, preferably using a graphical interface, and for receiving from the operator an input designed to classify in a certain manner the operating image as showing a turf to be cut or not.

The remote processing unit is configured for editing the legible storage support 4 in such a way as to generate, update or store the plurality of images.

In other words, by means of the remote processing unit it is possible to modify the contents of the legible storage support 4, for example, every time the operator receives an operating image which the control unit has not been able to classify it is possible for the operator to classify the operating image and re-transmit it to the robot 1, which will store it in the legible storage support 4 adding it to the plurality of reference images as a function of how the image has been classified by the operator.

In this way it is possible to expand the set of information on the basis of which the control unit performs the comparison process, thereby improving the decision-making capacity.

According to a possible embodiment, the system comprises a plurality of robots 1 each connected to the remote processing unit.

Every time the remote processing unit receives an operating image from any of the robots 1 connected to it, it is classified, indicating whether or not the operating image represents a turf to be cut.

It is therefore possible to update the legible storage supports 4 adding the classified operating image to the plurality of reference images.

The updating may be performed for the legible storage support 4 of each robot 1 or only for the legible storage support 4 of the robot 1 which has sent the operating image.

In particular, if the classified operating image has features and information which are considered useful only for the discrimination of further operating images acquired in the same working area "A", the updating will be performed only on the specific robot 1.

On the other hand, if the classified operating image has features and information which are considered useful in general terms for identifying a turf to be cut, the updating is performed on all the robots 1 connected to the remote processing unit.

In general, the updating is performed for all those robots 1 which it is considered can benefit from the increase in information provided by the control unit 5 for generating the comparison percentage value which is more accurate and reliable.

Advantageously, the system according to the invention makes it possible to provide a service for updating the information which the control unit 5 possesses to control the operation of the robot 1, allowing an increase in the decision-making capacity of the robot since each operating image for which the control unit 5 is unable to formulate an accurate judgement is analysed either by an operator or by comparing with a larger database of reference images.

The system described also makes it possible to guarantee at any time the correct management of the cutting operations performed by one or more robots 1, since it allows an interface to be made with an operator which can quickly resolve any situations in which the control unit 5 is not able to determine in a certain manner whether the robot 1 can be moved and/or operate in a predetermined portion of the working area "A".

The invention also relates to a method for controlling at least one lawn mower robot 1, preferably the method is performed using a system as described above.

The method according to the invention comprises moving the lawn mower robot 1 inside the work area "A" along the feed direction "X" to perform an operation for cutting a turf of the work area "A".

During the movement of the robot 1 a succession of operating images is acquired in a continuous fashion showing the surface "S" in front of the robot 1 along the feed direction "X".

In other words, the surface "S" is continuously monitored towards which the robot 1 is moving, in such a way as to be able to analyse it, determining whether or not the robot 1 can/must continue to move along the feed direction "X" and/or perform a cutting operation or if, on the other hand, it is opportune to modify at least one of its operating parameters so as to avoid any interactions (such as transit or execution of cutting operations) of the robot 1 with the surface "S".

This analysis is performed by comparing each of the operating images acquired with a plurality of reference images which show turfs to be cut and which can be stored both on a legible storage support 4 present on the robot 1 and in a suitable database prepared on a remote processing unit to which the robot 1 is connectable.

Depending on the comparison between each operating image and the plurality of reference images, respective percentage comparison values are generated which represent the probability that the respective operating image represents a turf to be cut.

If the comparison percentage value is less than a predetermined percentage value the method comprises modifying at least one operating parameter of the robot 1.

In other words, if it is not possible to determine with a predetermined margin of confidence that the surface "S" towards which the robot is moving has a turf which must be cut, at least one of the operating parameters of the robot 1 will be modified.

By way of a non-limiting example, it is possible to modify the feed direction "X" of the robot 1 or activate/deactivate the cutting means 1a.

In particular, the comparison between the operating images and the reference images is performed by extrapolating from each operating image at least one parametric value representing a relative respective attribute. The parametric value is then compared with a respective parametric value of the reference images.

Amongst the possible attributes which are being compared it is possible to select at least one between: RBG chromatic values of the individual pixels, spatial distribution of the individual coloured pixels, presence of discrete objects.

Advantageously, the method described herein makes it possible to control the movement of a lawn mower robot 1 inside a work area "A" in an accurate and precise manner without requiring complex operations for installing and preparing the work area "A".

## Claims

1. A lawn mower robot (1) movable in a substantially autonomous manner along a feed direction (X) inside a work area (A) for performing a cutting operation of a turf of the work area (A) comprising:
- at least one optical sensor (3) configured to continuously acquire a sequence of operating images of a surface (S) in front of the lawn mower robot along the feed direction (X);
- a legible storage support (4) configured for storing a plurality of reference images showing turf to be cut;
- a control unit (5) configured for comparing each operating image with the plurality of reference images generating a respective comparison percentage value representing the probability that the operating image shows a turf to be cut,
- said control unit (5) being configured to modify at least one operating parameter of the lawn mower robot if the comparison percentage value is less than a predetermined percentage value defining a confidence range inside of which it is possible to substantially guarantee a correct identification of the operating images,
- the lawn mower robot being connectable to a remote processing unit of a control system,
**characterised in that**
the control unit (5) is designed to send the operating images to a remote processing unit, to which the lawn mower robot (1) is designed to be connected, in such a way that,
if the respective comparison percentage value is less than the predetermined percentage value and greater than a percentage control value, the control unit (5) is configured for modifying at least one operating parameter of the lawn mower robot (1) to prevent the lawn mower robot (1) from continuing the cutting operation along the feed direction (X),
said percentage control value defining a confidence range inside of which it is possible to guarantee a correct identification of the images keeping unchanged the operating parameters of the lawn mower robot (1).

2. The robot according to claim 1, wherein the operating parameter comprises cutting means (1a) and/or the feed direction (X).

3. The robot according to any one of claims 1 or 2, wherein the plurality of reference images comprises images showing at least partly portions of the work area (A).

4. The robot according any one of claims 1-3, wherein the remote processing unit comprises at least one between: a smartphone, a tablet, a computer, a computing cloud.

5. The robot according to any one of claims 1-4, wherein the legible storage support (4) can be edited at least for generating, updating or storing the plurality of reference images.

6. A control system for a lawn mower robot comprising:
- at least one lawn mower robot (1) in accordance with one or more of the preceding claims;
- the remote processing unit being connected to the lawn mower robot for receiving the operating images from the respective control unit (5), when the percentage comparison value is less than the predetermined percentage value and greater than a percentage control value;
- the control unit being configured in such a way that, if the respective comparison percentage value is less than the predetermined percentage value and greater than a control percentage value, it is designed to modify at least one operating parameter of the lawn mower robot (1), so as to prevent the lawn mower robot (1) from continuing the cutting operation along the feed direction (X).

7. The control system according to claim 6, wherein the operating parameter comprises cutting means (1a) and/or the feed direction "X".

8. The system according to claim 7, wherein the remote processing unit is configured for determining for each operating image whether the operating image shows a turf to be cut, preferably as a function of an input which can be entered by an operator.

9. The system according to any one of claims 6-8, wherein the processing unit is configured for editing the legible storage support (4) in such a way as to generate, update or store the plurality of images.

10. A method of controlling a lawn mower robot according to one or more of the claims 1-5,
comprising the steps of:
- moving the lawn mower robot inside a work area (A) along a feed direction (X) for performing a cutting operation of a turf of the work area (A);
- continuously acquiring a sequence of operating images of a surface (S) in front of the lawn mower robot along the feed direction (X);
- comparing each of the operating images with a plurality of reference images showing turfs to be cut;
- generating as a function of the comparison respective percentage comparison values of the probability that the operating images represent a turf to be cut;
- modifying at least one operating parameter of the lawn mower robot if the comparison percentage value is less than a predetermined percentage value.

11. The method according to claim 10, wherein the comparing step comprises the steps of:
- extrapolating from each operating image at least one parametric value representing a respective attribute of the operating image;
- comparing the parametric value with a respective parametric value of each reference image;
the attribute being at least one between: RGB chromatic values of the individual pixels, spatial distribution of the individual coloured pixels, presence of discrete objects.

## Patentansprüche

1. Rasenmäherroboter (1), der in einer im Wesentlichen autonomen Weise entlang einer Vorschubrichtung (X) innerhalb eines Arbeitsbereichs (A) beweglich ist, um einen Schneidvorgang einer Wiese des Arbeitsbereichs (A) durchzuführen, umfassend:
- mindestens einen optischen Sensor (3), der dazu konfiguriert ist, kontinuierlich eine Sequenz von Betriebsbildern einer Oberfläche (S) vor dem Rasenmäherroboter entlang der Vorschubrichtung (X) zu erfassen;
- ein lesbares Speichermedium (4), das zum Speichern einer Vielzahl von Referenzbildern konfiguriert ist, die die zu schneidende Wiese zeigen;
- eine Steuereinheit (5), die zum Vergleichen eines jeden Betriebsbilds mit der Vielzahl von Referenzbildern konfiguriert ist und einen jeweiligen Vergleichsprozentwert erzeugt, der die Wahrscheinlichkeit darstellt, dass das Betriebsbild eine zu schneidende Wiese zeigt,
- wobei die Steuereinheit (5) dazu konfiguriert ist, mindestens einen Betriebsparameter des Rasenmäherroboters zu modifizieren, wenn der Vergleichsprozentwert kleiner als ein vorbestimmter Prozentwert ist, der ein Konfidenzintervall definiert, innerhalb dessen eine korrekte Identifizierung der Betriebsbilder im Wesentlichen garantiert werden kann,
- wobei der Rasenmäherroboter mit einer entfernten Verarbeitungseinheit eines Steuersystems verbindbar ist, **dadurch gekennzeichnet, dass** die Steuereinheit (5) ausgebildet ist, um die Betriebsbilder an eine entfernte Verarbeitungseinheit zu senden, an die der Rasenmäherroboter (1) ausgebildet ist, um derart verbunden zu werden, dass, wenn der jeweilige Vergleichsprozentwert kleiner als der vorbestimmte Prozentwert und größer als ein Prozentsteuerwert ist, die Steuereinheit (5) ausgebildet ist, um wenigstens einen Betriebsparameter des Rasenmäherroboters (1) zu modifizieren, um zu verhindern, dass der Rasenmäherroboter (1) den Schneidvorgang entlang der Vorschubrichtung (X) fortsetzt, wobei der Prozentsteuerwert ein Konfidenzintervall definiert, innerhalb dessen eine korrekte Identifizierung der Bilder gewährleistet werden kann, indem die Betriebsparameter des Rasenmäherroboters (1) unverändert bleiben.

2. Roboter nach Anspruch 1, wobei der Betriebsparameter Schneidmittel (1a) und/oder die Vorschubrichtung (X) umfasst.

3. Roboter nach einem der Ansprüche 1 oder 2, wobei die Vielzahl von Referenzbildern Bilder umfasst, die zumindest teilweise Abschnitte des Arbeitsbereichs (A) zeigen.

4. Roboter nach einem der Ansprüche 1-3, wobei die entfernte Verarbeitungseinheit mindestens eines umfasst zwischen: einem Smartphone, einem Tablet, einem Computer, einem Computing Cloud.

5. Roboter nach einem der Ansprüche 1-4, wobei das lesbare Speichermedium (4) zumindest zum Erzeugen, Aktualisieren oder Speichern der Vielzahl von Referenzbildern bearbeitet werden kann.

6. Steuersystem für einen Rasenmäherroboter, umfassend:
- mindestens einen Rasenmäherroboter (1) nach einem oder mehreren der vorhergehenden Ansprüche;
- wobei die entfernte Verarbeitungseinheit mit dem Rasenmäherroboter verbunden ist, um die Betriebsbilder von der jeweiligen Steuereinheit (5) zu empfangen, wenn der prozentuale Vergleichswert kleiner als der vorbestimmte Prozentwert und größer als ein Prozentsteuerwert ist;
- wobei die Steuereinheit derart konfiguriert ist, dass sie, wenn der jeweilige Vergleichsprozentwert kleiner als der vorbestimmte Prozentwert und größer als ein Steuerprozentwert ist, ausgebildet ist, mindestens einen Betriebsparameter des Rasenmäherroboters (1) zu modifizieren, um zu verhindern, dass der Rasenmäherroboter (1) den Schneidvorgang entlang der Vorschubrichtung (X) fortsetzt.

7. Steuersystem nach Anspruch 6, wobei der Betriebsparameter Schneidmittel (1a) und/oder die Vorschubrichtung "X" umfasst.

8. System nach Anspruch 7, wobei die entfernte Verarbeitungseinheit konfiguriert ist, um für ein jedes Betriebsbild zu bestimmen, ob das Betriebsbild eine zu schneidende Wiese zeigt, vorzugsweise als eine Funktion einer Eingabe, die von einem Bediener eingegeben werden kann.

9. System nach einem der Ansprüche 6-8, wobei die Verarbeitungseinheit zum Bearbeiten des lesbaren Speichermediums (4) derart konfiguriert ist, dass sie die Vielzahl von Bildern erzeugt, aktualisiert oder speichert.

10. Verfahren zum Steuern eines Rasenmäherroboters nach einem oder mehreren der Ansprüche 1-5, umfassend die Schritte:
- Bewegen des Rasenmäherroboters innerhalb eines Arbeitsbereichs (A) entlang einer Vorschubrichtung (X) zum Durchführen eines Schneidvorgangs einer Wiese des Arbeitsbereichs (A);
- kontinuierliches Erfassen einer Sequenz von Betriebsbildern einer Oberfläche (S) vor dem Rasenmäherroboter entlang der Vorschubrichtung (X);
- Vergleichen eines jeden der Betriebsbilder mit einer Vielzahl von Referenzbildern, die zu schneidende Wiesen zeigen;
- Erzeugen in Abhängigkeit vom Vergleich jeweiliger prozentualer Vergleichswerte der Wahrscheinlichkeit, dass die Betriebsbilder eine zu schneidende Wiese darstellen;
- Modifizieren mindestens eines Betriebsparameters des Rasenmäherroboters, wenn der Vergleichsprozentwert kleiner als ein vorbestimmter Prozentwert ist.

11. Verfahren nach Anspruch 10, wobei der Vergleichsschritt die folgenden Schritte umfasst:
- Extrapolieren von mindestens einem parametrischen Wert, der ein jeweiliges Attribut des Betriebsbilds darstellt, aus jedem Betriebsbild;
- Vergleichen des parametrischen Werts mit einem jeweiligen parametrischen Wert jedes Referenzbilds; wobei das Attribut mindestens eines der folgenden Attribute ist: RGB-Farbwerte der einzelnen Pixel, räumliche Verteilung der einzelnen Farbpixel, Vorhandensein von diskreten Objekten.

## Revendications

1. Robot-tondeuse (1) mobile de manière essentiellement autonome le long d'une direction de progression (X) à l'intérieur d'une zone de travail (A) pour effectuer une opération de coupe d'un gazon de la zone de travail (A) comprenant :
- au moins un capteur optique (3) configuré pour acquérir en continu une séquence d'images de fonctionnement d'une surface (S) devant le robot-tondeuse le long de la direction de progression (X) ;
- un support de stockage lisible (4) configuré pour stocker une pluralité d'images de référence indiquant du gazon à couper ;
- une unité de contrôle (5) configurée pour comparer chaque image de fonctionnement avec la pluralité d'images de référence générant une valeur de comparaison en pourcentage respective représentant la probabilité que l'image de fonctionnement indique un gazon à couper,
- ladite unité de contrôle (5) étant configurée pour modifier au moins un paramètre de fonctionnement du robot-tondeuse si la valeur de comparaison en pourcentage est inférieure à une valeur en pourcentage prédéterminée définissant un intervalle de confiance à l'intérieur duquel il est possible de garantir essentiellement une identification correcte des images de fonctionnement,
- le robot-tondeuse pouvant être connecté à une unité de traitement à distance d'un système de contrôle, **caractérisé en ce que** l'unité de contrôle (5) est conçue pour envoyer les images de fonctionnement à une unité de traitement à distance, à laquelle le robot-tondeuse (1) est conçu pour être connecté, de telle sorte que, si la valeur de comparaison en pourcentage respective est inférieure à la valeur en pourcentage prédéterminée et supérieure à une valeur de contrôle en pourcentage, l'unité de contrôle (5) est configurée pour modifier au moins un paramètre de fonctionnement du robot-tondeuse (1) pour empêcher le robot-tondeuse (1) de continuer l'opération de coupe le long de la direction de progression (X), ladite valeur de contrôle en pourcentage définissant un intervalle de confiance à l'intérieur duquel il est possible de garantir une identification correcte des images en maintenant inchangés les paramètres de fonctionnement du robot-tondeuse (1).

2. Robot selon la revendication 1, dans lequel le paramètre de fonctionnement comprend des moyens de coupe (1a) et/ou la direction de progression (X).

3. Robot selon l'une quelconque des revendications 1 ou 2, dans lequel la pluralité d'images de référence comprend des images indiquant au moins partiellement des parties de la zone de travail (A).

4. Robot selon l'une quelconque des revendications 1-3, dans lequel l'unité de traitement à distance comprend au moins un élément entre : un Smartphone, une tablette, un ordinateur, un nuage informatique.

5. Robot selon l'une quelconque des revendications 1-4, dans lequel le support de stockage lisible (4) peut être édité au moins pour générer, mettre à jour ou stocker la pluralité d'images de référence.

6. Système de contrôle pour un robot-tondeuse, comprenant :
- au moins un robot-tondeuse (1) selon l'une ou plusieurs des revendications précédentes ;
- l'unité de traitement à distance étant connectée au robot-tondeuse pour recevoir les images de fonctionnement de l'unité de contrôle (5) respective, lorsque la valeur de comparaison en pourcentage est inférieure à la valeur en pourcentage prédéterminée et supérieure à une valeur de contrôle en pourcentage ;
- l'unité de contrôle étant configurée de telle sorte que, si la valeur de comparaison en pourcentage respective est inférieure à la valeur en pourcentage prédéterminée et supérieure à une valeur de contrôle en pourcentage, celle-ci est conçue pour modifier au moins un paramètre de fonctionnement du robot-tondeuse (1), de manière à empêcher le robot-tondeuse (1) de poursuivre l'opération de coupe le long de la direction de progression (X).

7. Système de contrôle selon la revendication 6, dans lequel le paramètre de fonctionnement comprend des moyens de coupe (1a) et/ou la direction de progression « X ».

8. Système selon la revendication 7, dans lequel l'unité de traitement à distance est configurée pour déterminer, pour chaque image de fonctionnement, si l'image de fonctionnement indique du gazon à couper, de préférence en fonction d'une entrée pouvant être saisie par un opérateur.

9. Système selon l'une quelconque des revendications 6-8, dans lequel l'unité de traitement est configurée pour éditer le support de stockage lisible (4) de manière à générer, mettre à jour ou stocker la pluralité d'images.

10. Procédé de contrôle d'un robot-tondeuse selon l'une ou plusieurs des revendications 1-5, comprenant les étapes de :
- déplacer le robot-tondeuse à l'intérieur d'une zone de travail (A) le long d'une direction de progression (X) pour effectuer une opération de coupe d'un gazon de la zone de travail (A) ;
- acquérir en continu une séquence d'images de fonctionnement d'une surface (S) devant le robot-tondeuse le long de la direction de progression (X) ;
- comparer chacune des images de fonctionnement à une pluralité d'images de référence indiquant des gazons à couper ;
- générer en fonction de la comparaison des valeurs de comparaison en pourcentage respectives de la probabilité que les images de fonctionnement représentent un gazon à couper ;
- modifier au moins un paramètre de fonctionnement du robot-tondeuse si la valeur de comparaison en pourcentage est inférieure à une valeur en pourcentage prédéterminée.

11. Procédé selon la revendication 10, dans lequel l'étape de comparaison comprend les étapes de :
- extrapoler à partir de chaque image de fonctionnement au moins une valeur paramétrique représentant un attribut respectif de l'image de fonctionnement ;
- comparer la valeur paramétrique à une valeur paramétrique respective de chaque image de référence ; l'attribut étant au moins un des éléments entre : des valeurs chromatiques RVB des pixels individuels, la distribution spatiale des pixels individuels colorés, la présence d'objets distincts.
